# EUROPEAN PATENT SPECIFICATION

(11) **EP 1 478 226 B1**
(45) Date of publication and mention of the grant of the patent: **31.05.2006**
(21) Application number: 03706579.4
(22) Date of filing: 26.02.2003
(51) Int. Cl.: A01K 1/01

(54) **FOLDING PACK FOR ABSORBENT MATERIAL FOR A CAT LAVATORY**
FALTVERPACKUNG FÜR ABSORBIERENDES MATERIAL FÜR EINE KATZENTOILETTE
SACHET PLIANT POUR MATERIAU ABSORBANT DE CAISSE A CHAT

(30) Priority: 28.02.2002 DE 10208723
(43) Date of publication of application: 24.11.2004
(73) Proprietor: Mars Incorporated, McLean, Virginia 22101-3883 (US)
(72) Inventor: LANGE, Dietmar, 56179 Vallendar (DE)
(74) Representative: Winkler, Andreas Fritz Ernst
(86) International application number: PCT/EP2003/001960
(87) International publication number: WO 2003/071867

(56) References cited:
- WO-A-02/071837
- FR-A- 2 602 744
- FR-A- 2 813 064
- GB-A- 2 302 533
- US-A- 4 784 083
- US-A- 4 934 316
- US-A- 5 249 550
- US-A- 5 655 479
- US-A- 5 850 798

## Description

The invention relates to a folding pack for absorbent material for use in a cat lavatory, and a cat lavatory equipped therewith.

It is a well-known fact that cats can easily be trained to deposit their urine and faeces in a container provided for that purpose. In a simple embodiment, this container is filled with a porous, absorbent and preferably odour-inhibiting material known as cat litter. The cat litter has to be replaced regularly. Cleaning a cat lavatory of this kind is an onerous and unpleasant task, however, since it is possible for the lavatory walls to be soiled or for there to be litter adhering to the lavatory walls. In addition, large quantities of litter have to be disposed of each time, since the litter ought to be 6 to 8 cms deep on average, which means that the litter consumption is as a rule greater than would otherwise be necessary. Furthermore, simply tipping the cat litter into a dustbin or the like is also unhygienic, and, what is more, annoying dust and odour problems are unavoidable in the process.

Cat lavatories are known in the state of the art in which a resealable bag filled with cat litter can be placed in the cat lavatory container. That bag can be sealed after use and disposed of simply with the household refuse.

DE 31 17 900 A1, for example, teaches a container for holding litter material, in which are provided an inner bag and an outer bag surrounding said inner bag, wherein said inner bag consists of a folding blank having radial folds. In this solution, the outer bag is necessary in order to prevent the litter material from urging the folds of the inner bag apart and deforming it, so that the outer bag determines the shape of the inner bag. A disadvantage here is that a separate outer bag is needed as separate packaging, the purpose of which merely consists in preventing any unwanted deformation of the filled inner container.

Folding packs for holding litter material are known from e.g. FR-A-2 602 744 and FR-A-2 813 064.

The object of the invention consists in improving the known container and a cat lavatory equipped therewith such that the disadvantages described no longer occur and a folding pack is provided which is inexpensive to manufacture and easy to handle.

This object is achieved in accordance with the invention by a folding pack for absorbent material for use in a cat lavatory which forms a dimensionally stable container pack that can be unfolded for use and placed in a cat lavatory, as defined in claim 1.

The folding pack can be stackable and is substantially block-shaped. The folding pack is made from a blank of paper, pasteboard, paperboard, cardboard, light-weight plastic, a composite material or an absorbent material which is flat in its initial state

The folding pack has a central, rectangular, floor portion, with preferably rectangular wall portions adjoining said floor portion.

Corner portions are provided between adjacent wall portions, with said corner portions lying against said wall portions in the folded-up state, such that a substantially block-shaped space for holding absorbent material is formed.

There are lid portions adjoining wall or corner portions. Lid portions adjoin both the wall portions and the corner portions, such that, when the folding pack is in the folded-up state, there are several of the lid portions lying overlapping on top of one another. It is convenient for the lid portions to be substantially rectangular.

It is provided for there to be handle portions adjacent to the lid portions. The handle portions may lie flat on the lid portions or they may be designed to fold out away from them. It can further be provided for the handle portions to be designed to overlap several times, e.g. four, six or eight times, and thus to form a supporting handle for the folding pack with no tendency to tear off prematurely.

The absorbent material provided may be litter or even a layer of non-woven material, or both. The layer of non-woven material may comprise a highly absorbent and in particular odour binding material and may be joined to or integrated in the material of the folding pack. The layer of non-woven material may be between 0.1 and 1 cm thick, preferably 0.5 cm.

It can be provided for a layer of litter to be disposed on the layer of non-woven material. There will preferably be a sufficient quantity of litter material present in the folding pack to ensure that, when the folding pack is in the unfolded state and has been placed in a cat lavatory, the layer of litter is between 1 and 3 cms deep, preferably 2 cms, namely within a useful interior surface area of the cat lavatory, which will as a rule be (considerably) larger than the area of the floor portion of the folding pack. In this context, it will preferably be provided for the folding pack to be sufficiently deep and to have a sufficient volume to ensure that it is completely filled with litter, in order to achieve a layer of litter 2 cms deep, for example, when the folding pack is in the unfolded state and has been placed in a cat lavatory.

It is convenient for there to be at least one closure means present in order to re-seal the folding pack after use. Adhesive tape or a string my be provided for this purpose. The string (or an elastic tape or the like) may, for example, engage through holes disposed in the edge portion of the folding pack.

The object of the invention is further achieved by a cat lavatory according to claim 17 with a tray-shaped lower part and an insert comprising an unfolded folding pack according to the invention. It will preferably be provided for the folding pack to be capable of being unfolded in such a way that, after it has been inserted into the lower part, its outer edge portion can be folded over an upper peripheral rim of the lower part. In the process, said edge portion of the folding pack can be attachable to the upper peripheral rim of the cat lavatory. For this purpose, an upper part may be provided which can be removably placed on the lower part in order to secure the folded-over edge portion of the folding pack on the upper peripheral rim of the lower part. The upper part may be designed in the form of a frame adapted to the shape of the lower part.

The invention will now be described on the basis of a working embodiment with reference to a drawing, in which
Fig. 1 shows a perspective view of a folding pack according to the invention in the folded state,
Fig. 2 shows the folding pack of Fig. 1 in a partially unfolded or opened state,
Fig. 3 shows the folding pack in a further unfolded state,
Fig. 4 shows the folding pack in a substantially fully unfolded state and placed in a tray-shaped lower part of a cat lavatory, and
Fig. 5 shows a blank with folding lines for a folding pack in accordance with the invention.

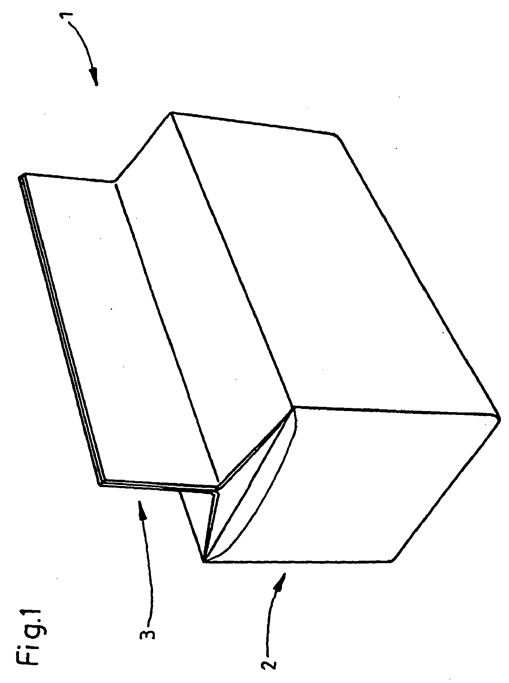

Fig. 1 shows a folding pack, designated as a whole by reference numeral 1, in the folded state in which it forms a dimensionally stable pack container which can be distributed in this form as a sales unit. The folding pack 1 has a substantially block-shaped pack body 2 with a handle portion 3 projecting upwards, the handle portion 3 being capable of being folded down horizontally for the purpose of stacking two or more folding packs 1 on top of one another. The folding pack 1 is produced, in a way that will be explained later, by folding a blank made of a suitable material, which may be paper, paperboard, cardboard, pasteboard, plastic, an absorbent material or a composite material (e.g. varnished or plastic-coated board).

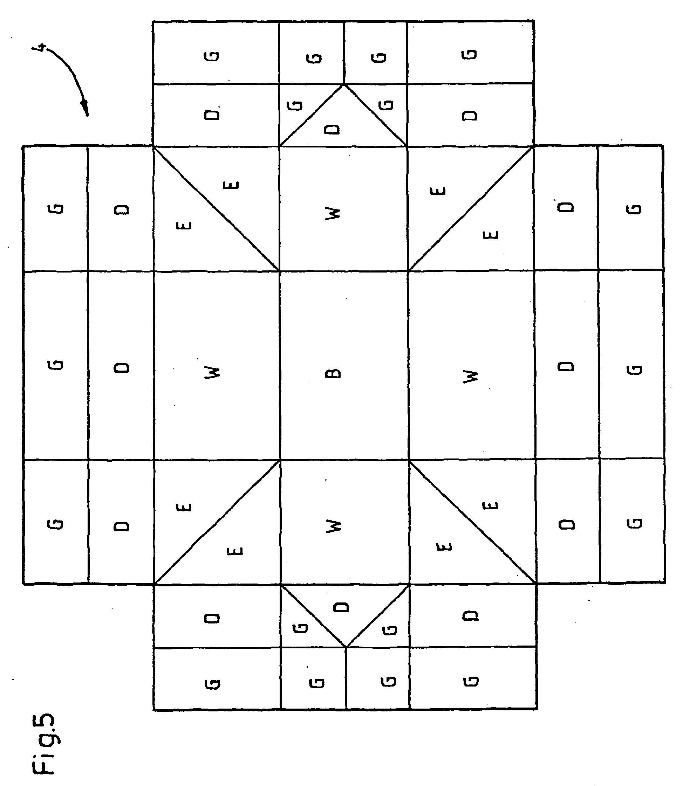

In order to explain the production of the folding pack by folding a blank of material, reference will be made in the following to Fig. 5, in which a blank 4 made from a suitable material is shown. Within the area of the blank 4 are formed a central floor portion B, with wall portions W adjacent to it and corner portions E between adjacent wall portions W. Adjoining said wall and corner portions on the outside is a lid portion D, which in turn has handle portions G adjacent to it. Between the portions mentioned there are fold lines in each case, which are indicated by continuous lines in Fig. 5.

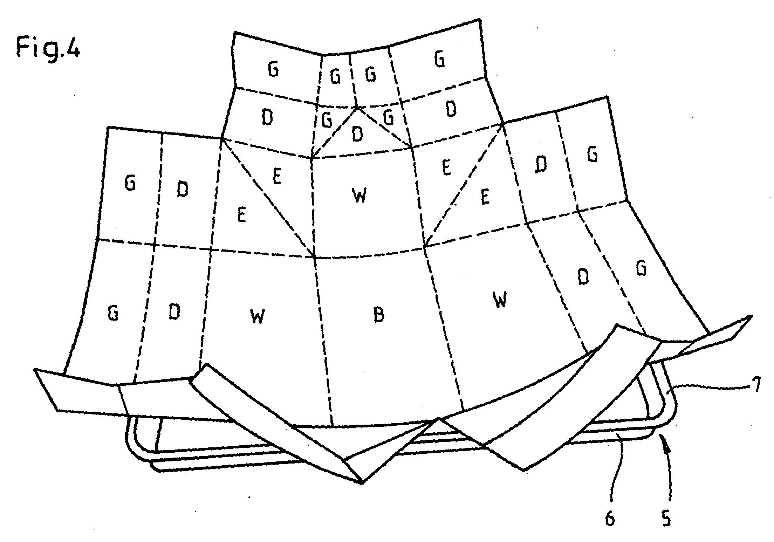

Fig. 4 shows a perspective view of a blank 4 according to the invention or, to be precise, an opened folding pack 1, where the alignment has been rotated by 90° compared to Fig. 5. The opened folding pack is placed on a pan or tray-shaped lower part 5 of a cat lavatory, it being possible for each of the four parts of the folding pack extending to the side and each comprising lid and handle portions D, G to be folded over a rim 7 of the lower part 5, in order to attach it to the lower part to a certain extent. It can be provided for the base area of the lower part 5 to correspond approximately to the area formed by the floor, wall and corner portions B, W, E of the folding pack, which in this embodiment is rectangular, so that the parts extending to the side and each consisting of lid and handle portions first run upwards along the inner side walls 6 of the lower part and can then be folded out sideways and down over the rim 7. A design of this kind is particularly appropriate in connection with a frame-like upper part of the cat lavatory, which can be removably placed on the lower part 5 in such a manner that it passes over the side walls or the rim 7 together with the portions D, G of the folding pack 1 which have been folded over it.

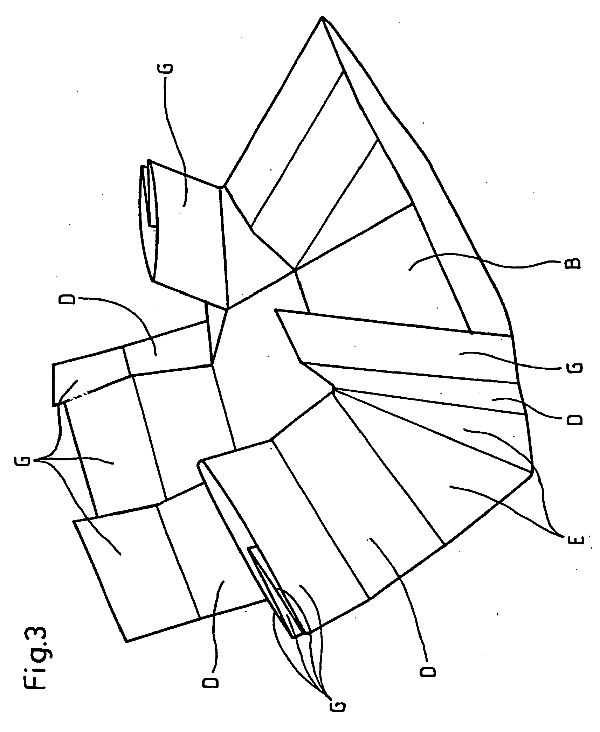

Fig. 3 shows the folding pack in an alignment rotated by about 45° compared to Fig. 4 and in a partially folded (or partially opened) state, in which not only the floor portion B, but also in particular the triangular corner portions E and the lid and handle portions D, G can be seen.

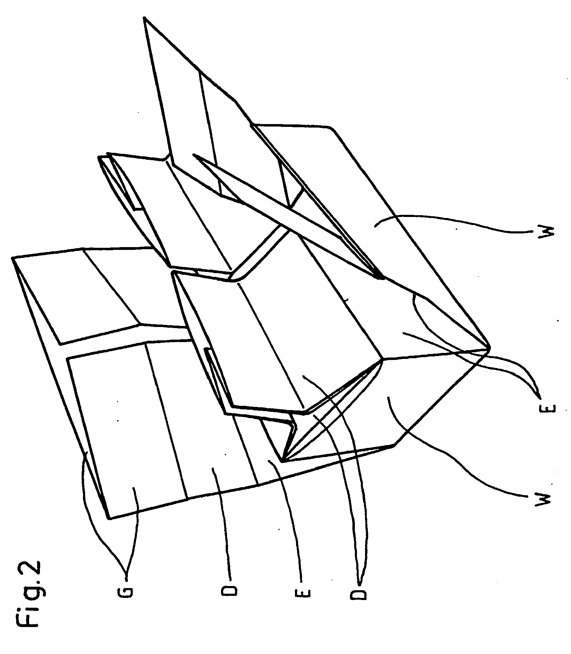

Fig. 2 shows a view corresponding to Fig. 3 in an even further folded state, which now also shows the walls W. As will be seen, the folded corner portions E lie against the walls W, so that a substantially block-shaped space for holding absorbent material is left in the interior of the folding pack 1.

As can further be seen from the drawings, the handle portion indicated by 3 in Fig. 1 is formed from handle portions G overlapping one another several times, six times in the embodiment illustrated, and even eight times in the rim areas at the side, so that a stable handle portion capable of load bearing is formed.

In the initial position according to Fig. 1, the folding pack 1 is filled, in accordance with a first embodiment, with a certain quantity of absorbent litter, the quantity of which is calculated in such a way that, in the state in which it is used (Fig. 4), there is a layer of litter 1 to 3 cms thick, for example, on the base area corresponding to the lower part the cat lavatory (which preferably corresponds to the areas B, W and E). In a preferred embodiment, the folding pack, or the walls W, is/are of such a height that the volume of the folding pack 1 is such that, when it is filled completely, it corresponds to a layer 2 cms deep, for example, on the total floor area of a cat lavatory formed by portions B, W and E. If so desired, the folding pack 1 can be made slightly larger, so that a certain reserve is formed, in order to make it possible for the folding pack, when folded together again after use, to hold not only the litter, but also the faeces deposited by the cat.

Alternatively or in addition to the litter, a layer of non-woven material consisting of a highly absorbent and in particular odour-inhibiting material may be provided, which will likewise preferably correspond in area to the overall area formed by the floor, wall and corner portions. To this end, it can be provided for the layer of non-woven material to be folded together, in the initial state shown in Fig. 1, to a size which corresponds to the floor portion B, and which is likewise unfolded when the pack is opened into the position for use (Fig. 4).

After use, i.e. after a period of use which can be up to a week, depending on the absorptive capacity of the material used, the folding pack is folded up again together with any litter present, and can then be returned to a shape corresponding to that shown in Fig. 1, in which it can be disposed of simply, dust-free and hygienically. Since the handle and lid portions do not come into contact with litter and/or cat faeces if, as is preferably the case in accordance with the invention, they were folded over the rim of a cat lavatory, the disposal process can be performed extremely hygienically.

## Claims

1. Folding pack (1) for absorbent material for use in a cat lavatory, which forms a dimensionally stable container pack that can be unfolded for use and placed in a cat lavatory, the folding pack (1) being made from a blank (4) of paper, pasteboard, paperboard, cardboard, light-weight-plastic, a composite material or an absorbent material which is flat in its initial state, the blank having
- a rectangular base area having four sides and being formed by a central rectangular floor portion (B), four wall portions (W) adjoining said floor portion (B), and corner portions (E) between adjacent wall portions (W), each of said portions (B, W, E) being connected to at least one adjacent one by at least one folding line,
- four side wall areas each connected to one side of the base area along a folding line and being formed by lid portions (D) and handle portions (G),
- four folding areas each connected to one of the side wall areas along a folding line and being formed by handle portions (G),
the folding pack (1) being foldable from a closed, block-shaped folded state, in which the floor, wall and lid portions, respectively, form floor, wall and lid faces of the pack, into an open state, in which the base area is folded flat, the side areas are folded upright from the base area and the folding areas are folded outwardly from the side areas, whereby a tray-shaped insert for a cat lavatory is formed.

2. The folding pack as claimed in Claim 1, **characterised in that** it is stackable.

3. The folding pack as claimed in Claim 1 or 2, **characterised in that** the corner portions (E) lie against said wall portions (W) in the folded-up state, such that a substantially block-shaped space for holding absorbent material is formed.

4. The folding pack as claimed in any of Claims 1 to 3, **characterised in that** there are lid portions (D) adjoining wall or corner portions (W, E).

5. The folding pack as claimed in any of Claims 1 to 4, **characterised in that** there are lid portions (D) adjoining both the wall portions (W) and the corner portions (E), such that, in the folded-up state, several of the lid portions (D) overlap one another.

6. The folding pack as claimed in any of the preceding claims, **characterised in that** the lid portions (D) are substantially rectangular.

7. The folding pack as claimed in any of the preceding claims, **characterised in that**, in the folded-up state, the handle portions (G) can be folded to lie flat on the lid portions (D).

8. The folding pack as claimed in any of the preceding claims, **characterised in that** the handle portions (G) are designed to overlap several times, especially four, six or eight times.

9. The folding pack as claimed in any of the preceding claims, **characterised in that** litter is contained as absorbent material.

10. The folding pack as claimed in any of Claims 1 to 9, **characterised in that** a layer of non-woven material is contained as absorbent material.

11. The folding pack as claimed in Claim 10, **characterised in that** the layer of non-woven material comprises a highly absorbent and in particular odour binding material.

12. The folding pack as claimed in either of Claims 10 or 11, **characterised in that** the layer of non-woven material is joined to or integrated in the material of the folding pack.

13. The folding pack as claimed in any of Claims 10 to 12, **characterised in that** layer of non-woven material is between 0.1 and 1 cm thick, preferably 0.5 cm.

14. The folding pack as claimed in any of Claims 10 to 13, **characterised in that** there is a layer of litter to be disposed on the layer of non-woven material.

15. The folding pack as claimed in any of the preceding claims, **characterised by** the presence of at least one closure means for re-sealing the folding pack after use.

16. The folding pack as claimed in Claim 15, **characterised in that** the closure means comprises adhesive tape or a string.

17. A cat lavatory, with a lower part (5), which is in particular tray-shaped, and an insert comprising an unfolded folding pack (1) as claimed in any of the preceding claims.

18. The cat lavatory as claimed in Claim 17, **characterised in that** the folding pack (1) can be unfolded in such a way that, after it has been inserted into the lower part (5), its folding area (G, D) can be folded over an upper peripheral rim (7) of the lower part (5).

19. The cat lavatory as claimed in Claim 18, **characterised in that** the folding area (G, D) of the folding pack (1) can be attached to the upper peripheral rim (7).

20. The cat lavatory as claimed in either of Claims 18 or 29, **characterised by** having an upper part which can be removably placed on the lower part (5) in order to secure the folding area (D, G) of the folding pack (1) on the upper peripheral rim (7) of the lower part (5).

21. The cat lavatory as claimed in Claim 20, **characterised in that** the upper part is designed in the form of a frame adapted to the shape of the lower part (5).

## Patentansprüche

1. Faltverpackung (1) für absorbierendes Material zur Verwendung in einer Katzentoilette, die ein formstabiles Verpackungsbehältnis bildet und zum Gebrauch auseinanderfaltbar und in eine Katzentoilette einlegbar ist, wobei die Faltverpackung (1) aus einem Zuschnitt (4) aus Papier, Pappe, Karton, leichtem Kunststoff, einem Verbundmaterial oder einem saugfähigen Material hergestellt ist, welches in seinem Ausgangszustand eben ist, wobei der Zuschnitt aufweist
- einen rechteckigen Basisabschnitt, der vier Seiten aufweist und der durch einen zentralen rechteckigen Bodenabschnitt (B), vier sich an den genannten Bodenabschnitt (B) anschließende Wandabschnitte (W) und, zwischen benachbarten Wandabschnitten (W), Eckabschnitte (E) gebildet ist, wobei jeder der genannten Abschnitte (B, W, E) über eine Faltlinie mit mindestens einem benachbarten Abschnitt verbunden ist,
- vier Seitenwandabschnitte, die jeweils mit einer Seite des Basisabschnitts entlang einer Faltlinie verbunden sind und durch Deckelabschnitte (D) und Griffabschnitte (G) gebildet sind,
- vier Faltabschnitte, die jeweils entlang einer Faltlinie mit einem der Seitenwandabschnitte verbunden sind und durch Griffabschnitte (G) gebildet sind,
wobei die Faltverpackung (1) ausgehend von einem geschlossenen, blockförmigen gefalteten Zustand, in dem die Boden-, Wand- und Deckelabschnitte Boden- Wand- und Dekkelseiten der Verpackung bilden, in einen offenen Zustand auffaltbar ist, in dem der Basisabschnitt eben gefaltet ist, die Seitenabschnitte ausgehend von dem Bodenabschnitt stehend gefaltet sind und die Faltbereiche ausgehend von den Seitenabschnitten nach außen gefaltet sind, so daß ein wannenförmiger Einsatz für eine Katzentoilette gebildet wird.

2. Faltverpackung nach Anspruch 1, **dadurch gekennzeichnet, daß** sie stapelbar ist.

3. Faltverpackung nach Anspruch 1 oder 2, **dadurch gekennzeichnet, daß** die Eckabschnitte (E) im gefalteten Zustand an den Wandabschnitten (W) anliegen, so daß ein im wesentlichen quaderförmiger Aufnahmeraum für absorbierendes Material gebildet wird.

4. Faltverpackung nach einem der Ansprüche 1 bis 3, **dadurch gekennzeichnet, daß** sich an Wand- oder Eckabschnitte (W, E) Deckelabschnitte (D) anschließen.

5. Faltverpackung nach einem der Ansprüche 1 bis 4, **dadurch gekennzeichnet, daß** sich sowohl an die Wandabschnitte (W) als auch an die Eckabschnitte (E) Deckelabschnitte (D) anschließen, so daß die Deckelabschnitte (D) im gefalteten Zustand einander mehrfach überlappen.

6. Faltverpackung nach einem der vorangehenden Ansprüche, **dadurch gekennzeichnet, daß** die Deckelabschnitte (D) im wesentlichen rechteckförmig sind.

7. Faltverpackung nach einem der vorangehenden Ansprüche, **dadurch gekennzeichnet, daß** die Griffabschnitte (G) im gefalteten Zustand flach auf die Deckelabschnitte (D) klappbar sind.

8. Faltverpackung nach einem der vorangehenden Ansprüche, **dadurch gekennzeichnet, daß** die Griffabschnitte (G) mehrfach, insbesondere vier-, sechs- oder achtfach überlappend ausgebildet sind.

9. Faltverpackung nach einem der vorangehenden Ansprüche, **dadurch gekennzeichnet, daß** ein Streugut als absorbierendes Material enthalten ist.

10. Faltverpackung nach einem der Ansprüche 1 bis 9, **dadurch gekennzeichnet, daß** eine Vlieseinlage als absorbierendes Material enthalten ist.

11. Faltverpackung nach Anspruch 10, **dadurch gekennzeichnet, daß** die Vlieseinlage ein saugstarkes und insbesondere geruchsbindendes Material umfaßt.

12. Faltverpackung nach Anspruch 10 oder 11, **dadurch gekennzeichnet, daß** die Vlieseinlage mit dem Material der Faltverpackung verbunden oder in dieses integriert ist.

13. Faltverpackung nach einem der Ansprüche 10 bis 12, **dadurch gekennzeichnet, daß** die Vlieseinlage eine Dicke von 0,1 bis 1 cm, bevorzugt 0,5 cm aufweist.

14. Faltverpackung nach einem der Ansprüche 10 bis 13, **dadurch gekennzeichnet, daß** auf der Vlieseinlage eine Schicht aus Streumaterial angeordnet ist.

15. Faltverpackung nach einem der vorangehenden Ansprüche, **gekennzeichnet durch** zumindest ein Verschlußmittel zum Wiederverschließen der Faltverpackung nach Gebrauch.

16. Faltverpackung nach Anspruch 15, **dadurch gekennzeichnet, daß** das Verschlußmittel Klebestreifen oder eine Schnur umfaßt.

17. Katzentoilette mit einem insbesondere wannenförmigen Unterteil (5) und einer Einlage, die eine auseinandergefaltete Faltverpackung (1) nach einem der vorangehenden Ansprüche umfaßt.

18. Katzentoilette nach Anspruch 17, **dadurch gekennzeichnet daß** die Faltverpackung (1) so auseinanderfaltbar ist, daß deren äußerer Faltbereich (G, D) nach dem Einlegen in das Unterteil (5) über einen oberen Umfangsrand (7) des Unterteils (5) herumlegbar ist.

19. Katzentoilette nach Anspruch 18, **dadurch gekennzeichnet, daß** der Faltbereich (G, D) der Faltverpackung (1) an dem oberen Umfangsrand (7) befestigbar ist.

20. Katzentoilette nach Anspruch 18 oder 19, **gekennzeichnet durch** ein auf das Unterteil (5) abnehmbar aufsetzbares Oberteil zum Sichern des herumgelegten Faltbereichs (D, G) der Faltverpackung (1) auf dem oberen Umfangsrand (7) des Unterteils (5).

21. Katzentoilette nach Anspruch 20, **dadurch gekennzeichnet, daß** das Oberteil in Form eines der Form des Unterteils (5) angepaßten Rahmens ausgebildet ist.

## Revendications

1. Paquet pliant (1) pour matériau absorbant destiné à être utilisé dans un bac à chat, formant un paquet conteneur de dimensions stables qui peut être déplié pour être utilisé et placé dans un bac à chat, le paquet dépliant (1) étant réalisé à partir d'une ébauche (4) en papier, en carton contrecollé, en carton-pâte, en carton, en plastique léger, en un matériau composite ou en un matériau absorbant qui est plat dans son état initial, l'ébauche présentant:
- une surface de base rectangulaire disposant de quatre côtés et étant formée d'une partie de plancher rectangulaire centrale (B), de quatre parties de paroi latérale (W) contiguës à ladite partie de plancher (B), et de parties de coin (E) entre les parties de paroi latérale adjacentes (W), chacune desdites parties (B, W, E) étant reliée à au moins une partie adjacente par au moins une ligne de pliage,
- quatre surfaces de paroi latérale, chacune reliée à un côté de la surface de base le long d'une ligne de pliage et étant formé par des parties de couvercle (D) et des parties de poignée (G),
- quatre surfaces de pliage chacune reliée à l'une des surfaces de paroi latérale le long d'une ligne de pliage et étant formé par des parties de poignée (G),
le paquet pliant (1) étant pliable à partir d'un état plié fermé, en forme de bloc, dans lequel les parties de plancher, de paroi et de couvercle, respectivement, forment les faces de plancher, de paroi et de couvercle du paquet, dans un état ouvert, dans lequel la surface de base est repliée à plat, les surfaces latérales sont repliées verticalement vers le haut, à partir de la surface de base et les surfaces de pliage sont pliées vers l'extérieur à partir des surfaces latérales, de sorte à former une partie à insérer en forme de bac pour un bac à chat.

2. Paquet pliant selon la revendication 1, **caractérisé en ce qu'**il est empilable.

3. Paquet pliant selon la revendication 1 ou 2, **caractérisé en ce que** les parties de coin (E) viennent en appui contre lesdites parties de paroi (W) dans l'état plié vers le haut, de telle sorte qu'un espace sensiblement en forme de bloc, pour retenir le matériau absorbant, soit formé.

4. Paquet pliant selon l'une quelconque des revendications 1 à 3, **caractérisé en ce qu'**il comporte des parties de couvercle (D) contiguës aux parties de paroi ou de coin (W, E).

5. Paquet pliant selon l'une quelconque des revendications 1 à 4, **caractérisé en ce qu'**il comporte des parties de couvercle (D) contiguës à la fois aux parties de paroi (W) et aux parties de coin (E), de telle sorte que, dans l'état plié vers le haut, plusieurs des parties de couvercle (D) se recouvrent mutuellement.

6. Paquet pliant selon l'une quelconque des revendications précédentes, **caractérisé en ce que** les parties de couvercle (D) sont sensiblement rectangulaires.

7. Paquet pliant selon l'une quelconque des revendications précédentes, **caractérisé en ce que**, dans l'état plié vers le haut, les parties de poignée (G) peuvent être pliées pour être mises à plat sur les parties de couvercle (D).

8. Paquet pliant selon l'une quelconque des revendications précédentes, **caractérisé en ce que** les parties de poignée (G) sont conçues pour se superposer plusieurs fois, et plus particulièrement quatre, six ou huit fois.

9. Paquet pliant selon l'une quelconque des revendications précédentes, **caractérisé en ce que** de la litière est contenue comme matériau absorbant.

10. Paquet pliant selon l'une quelconque des revendications 1 à 9, **caractérisé en ce qu'**une couche de matériau non-tissé est contenue comme matériau absorbant.

11. Paquet pliant selon la revendication 10, **caractérisé en ce que** la couche de matériau non-tissé comprend un matériau très absorbant et qui retient particulièrement les odeurs.

12. Paquet pliant selon l'une des revendications 10 ou 11, **caractérisé en ce que** la couche de matériau non-tissé est adjointe ou intégrée au matériau du paquet pliant.

13. Paquet pliant selon l'une quelconque des revendications 10 à 12, **caractérisé en ce que** la couche de matériau non-tissé présente une épaisseur entre 0,1 et 1 cm, de préférence 0,5 cm.

14. Paquet pliant selon l'une quelconque des revendications 10 à 13, **caractérisé en ce qu'**il comporte une couche de litière à disposer sur la couche de matériau non-tissé.

15. Paquet pliant selon l'une quelconque des revendications précédentes, **caractérisé par** la présence d'au moins un moyen de fermeture pour refermer hermétiquement le paquet pliant après utilisation.

16. Paquet pliant selon la revendication 15, **caractérisé en ce que** le moyen de fermeture comprend un ruban adhésif ou un cordon.

17. Un bac à chat, avec une partie inférieure (5), qui est particulièrement en forme de bac, et une partie à insérer comprenant un paquet pliant (1) déplié selon l'une quelconque des revendications précédentes.

18. Le bac à chat selon la revendication 17, **caractérisé en ce que** le paquet pliant (1) peut être déplié de telle sorte qu'après avoir été inséré dans la partie inférieure (5), sa surface de pliage (G, D) peut être repliée au-dessus d'un bord périphérique supérieur (7) de la partie inférieure (5).

19. Le bac à chat selon la revendication 18, **caractérisé en ce que** la surface de pliage (G, D) du paquet pliant (1) peut être attachée au bord périphérique supérieur (7).

20. Le bac à chat selon l'une des revendications 18 ou 29, **caractérisé en ce qu'**il comporte une partie supérieure qui peut être placée de façon amovible sur la partie inférieure (5) afin de fixer la surface de pliage (D, G) du paquet pliant (1) sur le bord périphérique supérieur (7) de la partie inférieure (5).

21. Le bac à chat selon la revendication 20, **caractérisé en ce que** la partie supérieure est conçue sous la forme d'un cadre adapté à la forme de la partie inférieure (5).
